# EUROPEAN PATENT APPLICATION

(11) **EP 3 896 873 A1**
(43) Date of publication of application: **20.10.2021**
(21) Application number: 19894992.7
(22) Date of filing: 13.11.2019
(51) Int. Cl.: H04B 17/318

(54) **FIELD INTENSITY PREDICTION METHOD AND APPARATUS, AND DEVICE AND STORAGE MEDIUM**

(30) Priority: 14.12.2018 CN 201811531563
(71) Applicant: ZTE Corporation, Shenzhen, Guangdong 518057 (CN)
(72) Inventor: QIU, Ruitao, Shenzhen, Guangdong 518057 (CN)
(74) Representative: Studio Torta S.p.A.
(86) International application number: PCT/CN2019/118086
(87) International publication number: WO 2020/119372

(57) **Abstract**

Disclosed are a field intensity prediction method and apparatus, and a device and a storage medium. The field intensity prediction method comprises: obtaining a reference scene of similar statistical characteristics to a target scene from a data universal set; carrying out model training based on some parameters of the target scene and corresponding historical parameters in the reference scene to obtain a prediction model; and using the prediction model to predict other parameters of the target scene. The reference scene of similar statistical characteristics is selected, model training is carried out based on some parameters of the target scene and historical parameters in the reference scene, and other parameters of the target scene are predicted based on the trained prediction model. By carrying out model training based on some parameters of the target scene and historical parameters in the reference scene, the prediction model is corrected to obtain a better prediction model, so that the prediction model has higher field intensity prediction precision, thereby improving the precision of field intensity prediction.

## Description

### Field of the Invention

The present disclosure relates to the field of communications, in particular to a field strength prediction method and apparatus, as well as a device and a storage medium.

### Background of the Invention

Field strength prediction for covered areas of mobile communications is performed by measuring and estimating field strength distribution and path propagation loss in the covered areas by means of a typical radio wave propagation model. This aims to compensate for possible errors in practical measurement of field strength and save significant cost and time consumed during the practical measurement, thereby providing a scientific basis for engineering design of a mobile communication system. The modeling procedure for a traditional model involves defining variables and formulas for calculating path loss, and then correcting formula parameters by using practical measurement data under various terrains. A classic field strength prediction model includes a flat earth correction model (a Bullington model), an Egli model, an Okumura/Hata model, a UIC method, etc. In recent years, practical measurement data has also been directly used to correct a machine learning model based on statistics. Regardless of the model, statistical data that is selected when correcting the parameters depends generally on terrains and landforms. For example, two sets of model parameters are respectively calculated for data collected for an urban terrain and a suburb terrain, and when a model is used, corresponding parameters are selected according to a predicted landform of a target cell so as to predict field strength distribution of the current cell.

In a scene of wireless signal weak coverage optimization, it tends to collect data in the same landform as much as possible during statistical data selection by existing model training methods, and a model obtained in this way exhibits better universality for terrain prediction, but not necessarily great prediction performance for a certain cell.

### Summary of the Invention

Embodiments of the present disclosure provides a field strength prediction method and apparatus as well as a device and a storage medium, which solves the problem in the background technology of relatively low field strength prediction accuracy.

In a first aspect, an embodiment of the present disclosure provides a field strength prediction method, including:
acquiring, from a data universal set, a reference scene having a statistics characteristic similar to that of a target scene;
training a model based on a portion of parameters in the target scene and corresponding historical parameters in the reference scene, so as to obtain a prediction model; and
using the prediction model to predict other parameters in the target scene.

According to an implementation of the embodiment of the disclosure, the step of acquiring, from the data universal set, the reference scene having the statistics characteristic similar to that of the target scene further includes:
calculating statistics of each scene in the data universal set;
calculating distances between the statistics of the target scene and the statistics of each of the reference scenes, respectively, where each of the reference scenes is a scene other than the target scene in the data universal set; and
sorting the reference scenes based on the respective distances, and selecting a reference scene having a similar statistics characteristic based on the sorting.

According to an implementation of the embodiment of the present invention, the step of calculating the statistics of each scene in the data universal set further includes:
setting a statistical indicator; and
calculating statistics of each scene in the data universal set based on the statistical indicator.

According to an implementation of the embodiment of the disclosure, the statistical indicator includes:
an average value of the respective distances between each of measurement points and a base station; or
a distribution relationship between an included angle formed between a line from each of the measurement points to the base station and an antenna orientation, and a field strength.

According to an implementation of the embodiment of the disclosure, in the calculation of the distances between the statistics of the target scene and the statistics of each of the reference scenes, the distances include:
Euclidean distance, absolute value distance, Chebyshev distance, Mahalanobis distance or Lance Williams distance.

According to an implementation of the embodiment of the disclosure, the step of selecting the reference scene having a similar statistics characteristic based on the sorting is implemented by:
selecting n reference scenes each having a similar statistics characteristic based on the sorting.

According to an implementation of the embodiment of the disclosure, the value of n is selected in such a way that:
the n takes a minimum value on the premise of satisfying a training sample count required for training the model.

According to an implementation of the embodiment of the disclosure, the n is equal to 10.

According to an implementation of the embodiments of the disclosure, the step of training the model based on the portion of parameters in the target scene and the corresponding historical parameters in the reference scene so as to obtain the prediction model further includes:
setting a fully-connected neural network as the prediction model; and
taking a mean square error as a loss function, using the portion of parameters in the target scene and the corresponding historical parameters in the reference scenes as training data, and training the prediction model by performing ADAM optimization, so as to obtain the trained prediction model.

In a second aspect, an embodiment of the present disclosure provides a field strength prediction apparatus, including:
an acquisition module configured to acquire a reference scene having a statistics characteristic similar to that of a target scene from a data universal set;
a training module configured to train a model based on a portion of parameters in the target scene and corresponding historical parameters in the reference scene, so as to obtain a prediction model; and
a prediction module configured to use the prediction model to predict other parameters in the target scene.

In a third aspect, an embodiment of the present disclosure provides a network device, including: a processor, a memory, and a computer program stored on the memory and executable on the processor, wherein the computer program, when executed by the processor, implements steps of any one of the methods according to the first aspect.

In a fourth aspect, an embodiment of the present disclosure provides a computer-readable storage medium storing thereon a computer program that, when executed by a processor, implements steps of any one of the methods according to the first aspect.

In the embodiments of the present disclosure, a reference scene having a similar statistics characteristic is selected, a model is trained based on a portion of parameters in the target scene and historical parameters in the reference scene, other parameters in the target scene are predicted based on the prediction model obtained by training, and the prediction model is corrected by training the model based on the portion of parameters in the target scene and the historical parameters in the reference scene, to obtain a better prediction model, such that the prediction model has higher field strength prediction accuracy, thereby improving the field strength prediction accuracy and achieving an effect of high field strength prediction accuracy.

The above description is merely a summary of the technical solutions of the disclosure. For a better understanding of the disclosure and a simple implementation according to the description, the preferred embodiments of the disclosure will be described by way of examples with reference to the drawings, from which the above and other objects, characteristics and advantages of the disclosure can appear more comprehensibly.

### Brief Description of the Drawings

By reading the following detailed description of preferred embodiments of the disclosure, various further advantages and benefits thereof will become clear and apparent to those skilled in the art. The drawings are merely for purposes of illustrating the preferred embodiments of the disclosure, and are not to be considered limiting its scope. Throughout the drawings, identical or similar reference symbols designate identical or similar elements. In the accompanying drawings:
Fig. 1 is a flow chart of the field strength prediction method according to an embodiment one of the present disclosure;
Fig. 2 is a flow chart of acquiring a reference scene having a statistics characteristic similar to that of the target scene from the data universal set according to the embodiment one of the present disclosure;
Fig. 3 is a schematic block diagram of a field strength prediction apparatus according to an embodiment two of the present disclosure;
Fig. 4 is a schematic block diagram of an acquisition module according to the embodiment two of the present disclosure;
Fig. 5 is a schematic block diagram of a statistics module according to the embodiment two of the present disclosure;
Fig. 6 is a schematic block diagram of a training module according to the embodiment two of the present disclosure;
Fig. 7 is a flow chart of using a data universal set of all cells to train a model according to an embodiment three of the present disclosure; and
Fig. 8 is a flow chart of the field strength prediction method according to the embodiment three of the present disclosure.

### Detailed Description of the Embodiments

Exemplary embodiments of the present disclosure will be described in more detail below with reference to the accompanying drawings. Although the exemplary embodiments of the present disclosure are shown in the accompanying drawings, it should be understood that the present disclosure can be embodied in various forms and should not be limited to the embodiments illustrated herein. In contrast, these embodiments are provided for more thorough understanding of the present disclosure, and for fully conveying the scope of the present disclosure to those skilled in the art.

The scenes in the embodiments of the present disclosure, such as the target scene and the reference scene, may be places such as a cell, a shopping mall and a project where field strength parameter adjustment is required. Hereinafter, the embodiments take a cell as an example, but are not intended to limit the application of the disclosed solutions in the cell.

One problem to be solved by some embodiments of the present disclosure mainly concerns that, for a cell with weak wireless signal coverage, network optimization and debugging personnel need to adjust antenna working parameters of a base station in order to improve signal coverage strength of the base station for weak covered areas of the current cell. There are generally antenna working parameters in multiple dimensions, such as transmission power, antenna azimuth, antenna tilt angle and antenna height, etc. However, a parameter space of the antenna working parameters is large, and both the direction and the magnitude of adjustment cannot be determined. A single commercial base station in reality generally lacks historical data for enriching its working parameters, and it is also not allowed to randomly change the working parameters many times. Therefore, predicting field strength of each grid in a cell after adjusting the working parameters has become one of the important parts for solving the problem of weak coverage.

The key difference between the above application and a traditional field strength prediction scenario is that historical field strength distribution data under some working parameters of the target cell in the embodiments of the present disclosure is known. Therefore, it is possible to compare a statistical law of certain indicators of the known historical data of the target cell with a statistical law of historical data of other cells to select a plurality of cells each having a statistical law most similar to that of the target cell, and to train a field strength prediction model by using data of these cells with rich working parameters and similar statistical laws, thereby improving the prediction accuracy of the model.

The embodiments of the present disclosure relate to the field of field strength prediction for covered areas of mobile communications, and in particular to how to select, when training a prediction model, cell data having similar signal field strength distribution from among a large amount of cell data, as training samples, so as to improve the prediction performance of the model.

### Embodiment One

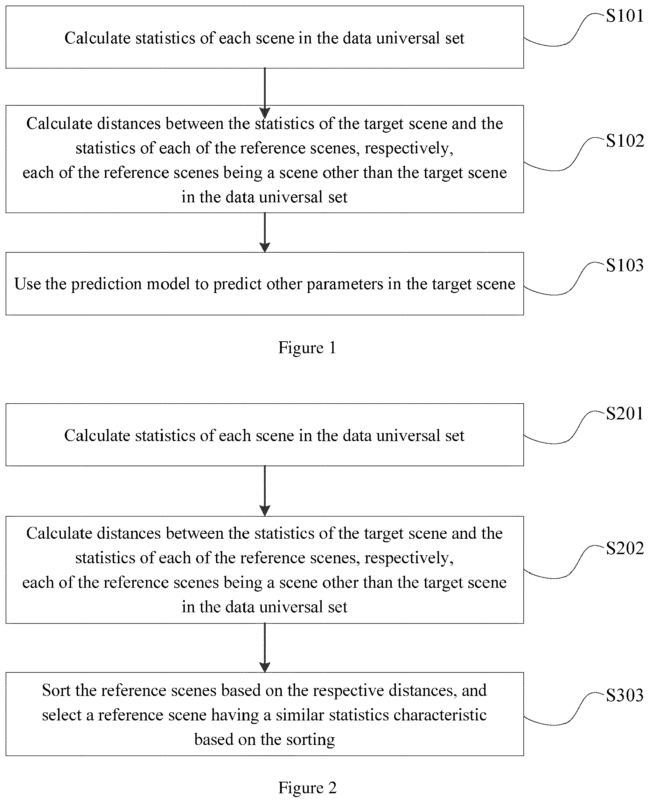

An embodiment of the present disclosure provides a field strength prediction method. As shown in figure 1, the method includes the following steps.

At step S101, a reference scene having a statistics characteristic similar to that of a target scene is acquired from a data universal set.

The data universal set is composed of practical measurement data for all scenes. In a further embodiment, for example, when an average value of respective distances between each of all measurement points in a certain cell and a base station is selected as a predefined statistical indicator, the data universal set is composed of practical measurement data for 75 cells, that is, average values of the respective distances between each of measurement points and a base station in practical measurement for 75 cells constitutes the data universal set. Target cells and reference cells corresponding to a target scene and reference scenes add up to a total of 75 cells. That is, each of the target cells is one of 75 cells.

At step S102, a model is trained based on a portion of parameters in the target scene and corresponding historical parameters in the reference scene, so as to obtain a prediction model.

There are a plurality of parameters that affect field strength in the target scene. Model training is carried out by using statistical data under some parameters in the target scene as historical data, as well as corresponding historical parameters in the reference scenes. In a further embodiment, there may be 15 times of working parameter changes in the target scene in total during a sampling period, statistical data under the first five times of working parameters may be taken as known historical data in the target scene, and corresponding historical data under this five times of working parameters in the reference scenes may be used for model training.

At step S 103, the prediction model is used to predict other parameters in the target scene.

There are a plurality of parameters that affect field strength in the target scene. In step S 102, some of the parameters are selected as historical data for model training, and prediction is carried out for the remaining other parameters in the target scene based on the prediction model obtained. In a further embodiment, there are 15 times of working parameter changes in the target scene in total during a sampling period, statistical data under the first five changes of working parameters are taken as known historical data of the target scene, and prediction is then carried out for the remaining ten changes of working parameters by using the prediction model.

In an alternative embodiment of the present disclosure, as shown in figure 2, step S101 of acquiring the reference scene having the statistics characteristic similar to that of the target scene from the data universal set further includes the following steps.

At step S201, statistics of each scene in the data universal set is calculated.

At step S202, distances between the statistics of the target scene and the statistics of each of the reference scenes are calculated, respectively, where each of the reference scenes is a scene other than the target scene in the data universal set.

At step S203, the reference scenes are sorted based on the respective distances, and a reference scene having a similar statistics characteristic is selected based on the sorting.

When a statistical indicator is set and a statistical method is selected, the statistics of each scene is calculated by performing data aggregation.

The distances between the statistics of the target scene and the statistics of each of all the remaining reference scenes are calculated. The distances commonly used for defining a similarity degree include Euclidean distance, absolute value distance, Chebyshev distance, Mahalanobis distance, Lance Williams distance, etc. In a current scene, it may be considered that statistics of each cell is a point in a multi-dimensional space, and accordingly, Euclidean distance, which is the most commonly used, can satisfy measurement requirements. Hence, optionally, Euclidean distance may be used throughout the embodiments of the present disclosure.

The reference scenes are sorted based on the respective distances, and a reference scene having the most similar statistics characteristic is selected on an as-needed basis. Optionally, the step of selecting the reference scene having a similar statistics characteristic based on the sorting is implemented by selecting n reference scenes each having a similar statistics characteristic based on the sorting. Optionally, the principle of the determination of the value of n during a practical operation is: as few reference scenes as possible (a minimum n) should be selected as similar reference scenes on the premise of satisfying a training sample count required for training the model, in order to enable the model to learn the optimal law. Optionally, taking the parameter scale of a set neural network and the size of a data set into consideration, set n=10, that is, the first ten most similar reference scenes serve as similar reference scenes.

According to an implementation of the embodiment of the disclosure, in step S201 of calculating the statistics of each scene in the data universal set based on the statistical indicator, a statistical indicator is set; and the statistics of each scene in the data universal set is calculated based on the statistical indicator.

Optionally, the statistical indicator includes at least one of an average value of the respective distances between each of measurement points and a base station, and a distribution relationship between an included angle formed between a line from each of the measurement points to the base station and an antenna orientation, and a field strength.

According to an alternative embodiment of the present disclosure, in step S102 of training the model based on the portion of parameters in the target scene and the corresponding historical parameters in the reference scene so as to obtain the prediction model, a fully-connected neural network as the prediction model is set; and a mean square error is taken as a loss function, the portion of parameters in the target scene and the corresponding historical parameters in the reference scenes are used as training data, and the prediction model is trained by performing ADAM optimization, so as to obtain the trained prediction model.

### Embodiment Two

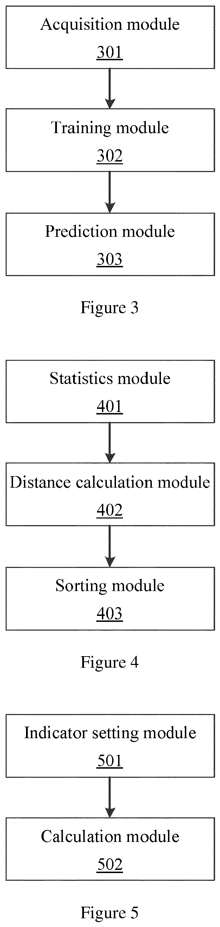

An embodiment of the present disclosure provides a field strength prediction apparatus. As shown in figure 3, the apparatus includes the following modules.

An acquisition module 301 is configured to acquire a reference scene having a statistics characteristic similar to that of a target scene from a data universal set.

A training module 302 is configured to train a model based on a portion of parameters in the target scene and corresponding historical parameters in the reference scene, so as to obtain a prediction model.

A prediction module 303 is configured to use the prediction model to predict other parameters in the target scene.

In an alternative embodiment of the present disclosure, as shown in figure 4, the acquisition module 301 further includes the following modules.

A statistics module 401 is configured to calculate statistics of each scene in the data universal set.

A distance calculation module 402 is configured to calculate distances between the statistics of the target scene and the statistics of each of the reference scenes, respectively, where each of the reference scenes is a scene other than the target scene in the data universal set.

A sorting module 403 is configured to sort the reference scenes based on the respective distances, and selecting a reference scene having a similar statistics characteristic based on the sorting.

In an alternative embodiment of the present disclosure, as shown in figure 5, the statistics module 401 further includes the following modules.

An indicator setting module 501 is configured to set a statistical indicator.

A calculation module 502 is configured to calculate statistics of each scene in the data universal set based on the statistical indicator.

In an alternative embodiment of the present disclosure, the statistical indicator includes:
an average value of the the respective distances between each of measurement points and a base station;
   or
a distribution relationship between an included angle formed between a line from each of the measurement points to the base station and an antenna orientation, and a field strength.

In an alternative embodiment of the present disclosure, in the distance calculation module 402, the distance includes:
Euclidean distance, absolute value distance, Chebyshev distance, Mahalanobis distance or Lance Williams distance.

In an alternative embodiment of the present disclosure, the sorting module 403 is further used for selecting n reference scenes each having a similar statistics characteristic based on the sorting.

In an alternative embodiment of the present disclosure, the value of n is selected in such a way that:
the n takes a minimum value on the premise of satisfying a training sample count required for training the model.

In an alternative embodiment of the present disclosure, the n is equal to 10.

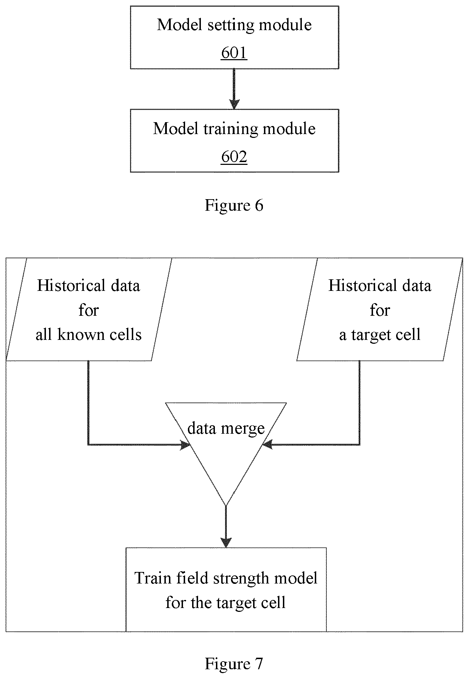

In an alternative embodiment of the present disclosure, as shown in figure 6, the training module 302 further includes the following modules.

A model setting module 601 is configured to set a fully-connected neural network as the prediction model.

A model training module 602 is configured to take a mean square error as a loss function, use the portion of parameters in the target scene and the corresponding historical parameters in the reference scenes as training data, and train the prediction model by performing ADAM optimization, so as to obtain the trained prediction model.

### Embodiment Three

In the present embodiment, an average value of respective distances between each of all measurement points in a certain cell and a base station is selected as a predefined statistical indicator, and the statistics can reflect a distance characteristic of a main covered area of a cell with respect to an antenna. By means of taking this as a measure of cell similarity, a cell in a distance most similar to a main signal covered area of a target cell may be found in order to improve the prediction accuracy of a model. A detailed implementation of this process includes the following steps.

In first step, a data universal set is composed of practical measurement data for 75 cells, and for each cell involved in the data universal set, statistics is compiled on an average value of the respective distances between each of sampling points and an antenna for the current cell.

In second step, Euclidean distances between the average values of the distances associated with the cells are calculated. The Euclidean distances for some cells are shown in table 1, where 0 to 5 in both a row and a column represent numbers of the cells.

**Table 1: Euclidean distances between average values regarding MR points of cells**

| | **0** | **1** | **2** | **3** | **4** | **5** |
|---|---|---|---|---|---|---|
| **0** | 0 | 1.195982 | 1.125023 | 1.146587 | 0.931234 | 1.044926 |
| **1** | 1.195982 | 0 | 0.949973 | 0.975913 | 1.415562 | 1.307575 |
| **2** | 1.125023 | 0.949973 | 0 | 0.741264 | 1.277728 | 1.180536 |
| **3** | 1.146587 | 0.975913 | 0.741264 | 0 | 1.182811 | 1.302641 |
| **4** | 0.931234 | 1.415562 | 1.277728 | 1.182811 | 0 | 1.22037 |
| **5** | 1.044926 | 1.307575 | 1.180536 | 1.302641 | 1.22037 | 0 |

In third step, a cell with number 74 is taken as a prediction cell, the other cells are sorted according to the distances in table 1 in ascending order, and first ten cells are selected as cells most similar to the current cell.

In fourth step, there are totally 15 times of working parameter changes in the cell with number 74 during a sampling period, statistical data under the first five changes of working parameters taken as known historical data of the current cell, together with the data of the most similar cells selected in third step, may be used as training data. Moreover, a fully-connected neural network is defined as a field strength prediction model, which is trained by taking a mean square error (MSE) as a loss function and performing an ADAM optimization.

In fifth step, field strength distribution under the last ten changes of working parameters for the cell with number 74 is predicted by using the trained model, and taking a mean absolute error (MAE) as an evaluation standard for model prediction performance, where an MAE obtained is 6.71 dB. If data for the remaining 74 cells are used as training data to train the model, where a prediction MAE under the same experiment condition is 7.97 dB. Compared with the MAE obtained by selecting data for 74 cells as training data to train a model in the existing art, the prediction MAE of the field strength prediction method provided by the embodiments of the present disclosure can decrease by 1.26 dB.

In sixth step, different cells are selected as test sets, and second step to fifth step are repeated. Compared with a method using entire data, an average MAE of field strength predicted for 15 test cells by using the field strength prediction method with respect to actual field strength decreases by 0.8 dB.

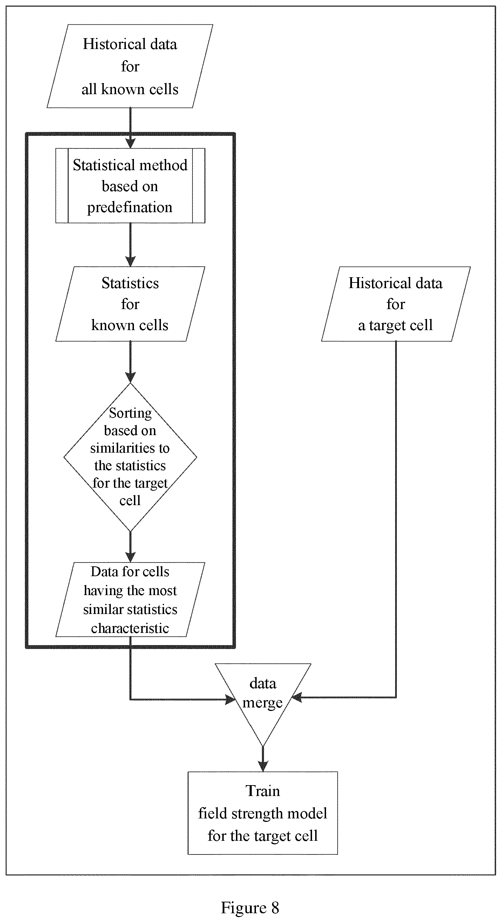

In the embodiments of the present disclosure, a field strength prediction model is trained by using historical data of most similar cells selected and historical data of a target cell, and a performance indicator of the model predicting field strength distribution under unknown working parameters of the target cell is calculated. Moreover, the model is trained by using a data universal set for all cells, and the same steps are performed to compare influences of the two training data selection methods on model prediction performance. The flow of training a model by using a data universal set for all cells is as shown in figure 7, and a flow of the field strength prediction method according to the embodiment of the present disclosure is shown in figure 8. The content in the bold block in figure 8 shows the main difference between the field strength prediction method as shown in figure 8 and the model training by using a data universal set as shown in figure 7.

One improvement of the embodiment of the present disclosure is to search a data universal set for a plurality of cells, whose statistical laws of some indicators are as similar as possible to that of a target cell as statistical data for correcting a model. Compared with a model trained by using an entire data set, a model trained by using data samples of similar cells has higher field strength prediction accuracy.

As a result, a predefined statistical method taking a mean value of the respective distances between each of measurement points and a base station gives a positive gain for improving the prediction accuracy of a field strength prediction model.

### Embodiment Four

In the present embodiment, distribution relationships between included angles each formed between a line from each point of all MR points in a certain cell to a base station and an antenna orientation (hereinafter referred to as included angles), and field strengths, respectively, are selected as predefined statistical indicators, and the statistics can reflect field strength of each covered sector of the cell. By means of taking this as a measure of cell similarity, a cell having coverage strength most similar to sectors of a target cell can be found in order to improve the prediction accuracy of a model. A detailed implementation of this process includes the following steps.

In first step, a data universal set is composed of practical measurement data for 75 cells, and for each cell involves in the data universal set, taking ten degrees as an interval, statistics is compiled on average field strength of all measurement points within each angle interval, and a 36-dimensional vector *v̅_{cell}* = [*rsrp*₁*, rsrp*₂,*...rsrp*₃₆] of the cell can thus be obtained.

In second step, Euclidean distances between vectors of the cells are calculated to obtain table 2, where 0 to 5 in both a row and a column represent numbers of the cells.

**Table 2: Euclidean distances between included angle-field strength vectors of cells**

| | **0** | **1** | **2** | **3** | **4** | **5** |
|---|---|---|---|---|---|---|
| **0** | 0 | 1.195982 | 1.125023 | 1.146587 | 0.931234 | 1.044926 |
| **1** | 1.195982 | 0 | 0.949973 | 0.975913 | 1.415562 | 1.307575 |
| **2** | 1.125023 | 0.949973 | 0 | 0.741264 | 1.277728 | 1.180536 |
| **3** | 1.146587 | 0.975913 | 0.741264 | 0 | 1.182811 | 1.302641 |
| **4** | 0.931234 | 1.415562 | 1.277728 | 1.182811 | 0 | 1.22037 |
| **5** | 1.044926 | 1.307575 | 1.180536 | 1.302641 | 1.22037 | 0 |

In third step, a cell with number 74 is taken as a prediction cell, the other cells are sorted according to the distances in table 2 in ascending order, and first ten cells are selected as cells most similar to the current cell.

In fourth step, there are totally 15 times of working parameter changes in the cell with number 74 during a sampling period, statistical data under the first five changes of working parameters taken as known historical data of the current cell, together with the data of the most similar cells selected in third step, may be used as training data. Moreover, a fully-connected neural network is defined as a field strength prediction model, and the model is trained by taking a mean square error (MSE) as a loss function and performing an ADAM optimization.

In fifth step, field strength distribution under the last ten changes of working parameters for the cell is predicted by using the trained model, and taking a mean absolute error (MAE) as an evaluation standard for model prediction performance, where an MAE obtained by the method of the embodiment of the present disclosure is 6.13 dB. If data for the remaining 74 cells are used as training data to train the model, where a prediction MAE under the same experiment condition is 7.97 dB. By comparison, the prediction performance of the method of the embodiment of the present disclosure can increase by 1.84 dB.

In sixth step, different cells are selected as test sets, and second step to fifth step are repeated. Compared with a method using entire data, an average MAE of field strength predicted for 15 test cells by using the method provided by the embodiment of the present disclosure with respect to actual field strength decreases by 0.97 dB.

As a result, a predefined statistical method taking an included angle-field strength distribution relationship gives a positive gain for improving the prediction accuracy of a field strength prediction model.

### Embodiment Five

The fifth embodiment of the present disclosure provides a network device, which can be understood as an entity apparatus, comprising a processor and a memory storing an instruction that is executable by the processor, and, when executed by the processor, performs steps of any one of the methods according to the embodiment one.

For implementation process of the steps of the above-mentioned method, reference can be made to the first embodiment and the second embodiment, and it is not repeatedly explained herein.

The processor may be a universal processor, such as a central processing unit (CPU), may also be a digital signal processor (DSP) and an application specific integrated circuit (ASIC), or may be configured as one or more integrated circuits for implementing the embodiments of the present disclosure. The memory is configured to store executable instructions of the processor, and to store a program code and transmit the program code to the processor. The memory may include a volatile memory, such as a random access memory (RAM), or a non-volatile memory, such as a read-only memory (ROM), a flash memory, a hard disk drive (HDD) or a solid-state drive (SSD), or a combination of the types of memories described above.

### Embodiment Six

The embodiment six of the present disclosure provides a computer-readable storage medium storing thereon a computer program that, when executed by a processor, implements steps of any one of the methods according to the embodiment one.

For implementation process of the steps of the above-mentioned method, reference can be made to the first embodiment and the second embodiment, and it is not repeatedly explained herein. The computer-readable storage medium includes, but are not limited to, a ROM, a RAM, a disk, an optical disk, etc.

It should be noted that, as used herein, the term "comprise", "include" or any variant thereof is intended to encompass all non-exclusive inclusion, so that a process, method, article or device including a series of elements not only includes those elements, but also includes other elements that are not explicitly listed, or elements inherent to the process, method, article or device. Without particular limitation, an element defined by "including/comprising a/an..." does not exclude other identical elements existing in the process, method, article, or device that includes the element.

The serial numbers of the foregoing embodiments of the present disclosure are for descriptive purposes only, but not represent the advantages and disadvantages of the embodiments.

Through the description of the above embodiments, those skilled in the art may be clearly aware that the methods according to the above embodiments can be implemented by means of software plus necessary general hardware platforms, and of course may also be implemented by hardware, but in many cases the former is better. Based on such understanding, the technical solution of the present disclosure in essence or the portion of the technical solution of the present disclosure that contributes to the existing technology may be embodied in the form of a software product. This computer software product is stored in a storage medium (for example a ROM/RAM, a magnetic disk, and an optical disk), and includes several instructions to cause one terminal device (which may be a mobile phone, a computer, a server, an air -conditioner or a network device) to execute the method according to respective embodiments.

The embodiments of the present disclosure are described above with reference to the drawings. However, the present disclosure is not limited to the aforementioned particular embodiments. The aforementioned particular embodiments are merely for illustration rather than limitation. In light of the teachings of the present disclosure, those skilled in the art can make various modifications and equivalents without departing from the scope of the appended claims, such modifications and equivalents being regarded as within the scope of the present disclosure.

## Claims

1. A field strength prediction method, comprising:
acquiring, from a data universal set, a reference scene having a statistics characteristic similar to that of a target scene;
training a model based on a portion of parameters in the target scene and corresponding historical parameters in the reference scene, so as to obtain a prediction model; and
using the prediction model to predict other parameters in the target scene.

2. The field strength prediction method according to claim 1, wherein the step of acquiring, from the data universal set, the reference scene having the statistics characteristic similar to that of the target scene further comprises:
calculating statistics of each scene in the data universal set;
calculating distances between the statistics of the target scene and the statistics of each of the reference scenes, respectively, wherein each of the reference scenes is a scene other than the target scene in the data universal set; and
sorting the reference scenes based on the respective distances, and selecting a reference scene having a similar statistics characteristic based on the sorting.

3. The field strength prediction method according to claim 2, wherein the step of calculating the statistics of each scene in the data universal set further comprises:
setting a statistical indicator; and
calculating the statistics of each scene in the data universal set based on the statistical indicator.

4. The field strength prediction method according to claim 3, wherein the statistical indicator comprises:
an average value of the respective distances between each of measurement points and a base station;
or
a distribution relationship between an included angle formed between a line from each of the measurement points to the base station and an antenna orientation, and a field strength.

5. The field strength prediction method according to claim 2, wherein in the calculation of the distances between the statistics of the target scene and the statistics of each of the reference scenes, the distances comprise:
Euclidean distance, absolute value distance, Chebyshev distance, Mahalanobis distance or Lance Williams distance.

6. The field strength prediction method according to claim 2, wherein the step of selecting the reference scene having a similar statistics characteristic based on the sorting is implemented by:
selecting n reference scenes each having a similar statistics characteristic based on the sorting.

7. The field strength prediction method according to claim 6, wherein the value of n is selected in such a way that
the n takes a minimum value on the premise of satisfying a training sample count required for training the model.

8. The field strength prediction method according to claim 6 or 7, wherein the n is equal to 10.

9. The field strength prediction method according to claim 1, wherein the step of training the model based on the portion of parameters in the target scene and the corresponding historical parameters in the reference scene so as to obtain the prediction model further comprises:
setting a fully-connected neural network as the prediction model; and
taking a mean square error as a loss function, using the portion of parameters in the target scene and the corresponding historical parameters in the reference scenes as training data, and training the prediction model by performing ADAM optimization, so as to obtain the trained prediction model.

10. A field strength prediction apparatus, comprising:
an acquisition module configured to acquire a reference scene having a statistics characteristic similar to that of a target scene from a data universal set;
a training module configured to train a model based on a portion of parameters in the target scene and corresponding historical parameters in the reference scene, so as to obtain a prediction model; and
a prediction module configured to use the prediction model to predict other parameters in the target scene.

11. A network device, comprising: a processor, a memory, and a computer program stored on the memory and executable on the processor, wherein the computer program, when executed by the processor, implements steps of the method according to any one of claims 1 to 9.

12. A computer-readable storage medium storing thereon a computer program that, when executed by a processor, implements steps of the method according to any one of claims 1 to 9.
